# EUROPÄISCHE PATENTSCHRIFT

(11) **EP 3 976 404 B1**
(45) Veröffentlichungstag und Bekanntmachung des Hinweises auf die Patenterteilung: **27.12.2023**
(21) Anmeldenummer: 20736997.6
(22) Anmeldetag: 03.07.2020
(51) Int. Cl.: B60H 1/00

(54) **VERFAHREN ZUR REGELUNG EINES KLIMAGERÄTS**
METHOD FOR CONTROLLING AN AIR-CONDITIONING DEVICE
PROCÉDÉ DE COMMANDE DE DISPOSITIF DE CLIMATISATION

(30) Priorität: 02.08.2019 DE 102019211638
(43) Veröffentlichungstag der Anmeldung: 06.04.2022
(73) Patentinhaber: Siemens Mobility GmbH, 81739 München (DE)
(72) Erfinder: HILDEBRANDT, Alexander, 44789 Bochum (DE); POHL, Thomas, 83278 Traunstein (DE)
(74) Vertreter: Siemens Patent Attorneys
(86) Internationale Anmeldenummer: PCT/EP2020/068833
(87) Internationale Veröffentlichungsnummer: WO 2021/023448

(56) Entgegenhaltungen:
- EP-A1- 3 326 850
- DE-A1- 4 214 686
- DE-C2- 4 214 686
- FR-A1- 2 917 854

## Beschreibung

Die Erfindung bezieht sich auf ein Verfahren zur Regelung eines Klimageräts nach dem Oberbegriff von Anspruch 1.

Ein solches Verfahren ist aus der EP 3 326 850 A1 bekannt.

Danach wird bei dem Verfahren mittels Kühl- und Heizeinrichtungen des Klimagerätes konditionierte Zuluft für den Innenraum eines Fahrzeugs für Personenbeförderung erzeugt.

Bei einem solchen Verfahren ist es insbesondere für die Klimatisierung von Schienenfahrzeugen bekannt, aktuelle Abweichungen von Behaglichkeitsparametern, wie Temperatur, Luftfeuchtigkeit und CO₂-Konzentration des Fahrgastinnenraumes im Vergleich zu entsprechenden Sollwertvorgaben für diese Parameter festzustellen. Ausgehend davon werden die erforderlichen Leistungen für ein Heizen und/oder Kühlen sowie Lüften ermittelt.

Dabei steht regelmäßig ein Klimagerät zur Verfügung, das konzeptabhängig mit jeweils zwei bis vier Heizleistungsstufen, Kälteleistungsstufen und Lüftungsstufen auf die ermittelten Anforderungen hinsichtlich des Erreichens der gewünschten Behaglichkeitsparameterwerte reagieren kann. Aus diesem Grunde können die seitens des Betriebs des Fahrzeugs bedingten Leistungsanforderungen und damit der gewünschte Klimakomfort nur näherungsweise und häufig genug auch nur mit einer zu großen zeitlichen Verzögerung eingestellt werden.

Ausgehend hiervon liegt der Erfindung die Aufgabe zugrunde, dass eingangs genannte Verfahren derart weiterzuentwickeln, dass vorgegebene Werte von Behaglichkeitsparametern für den Fahrgastinnenraum genauer und zügiger erfüllt werden können. Diese Aufgabe wird gelöst durch ein Verfahren zur Regelung eines Klimageräts, mit dem mittels Kühl- und Heizeinrichtungen konditionierte Zuluft für den Innenraum eines Fahrzeugs erzeugt wird, wobei die Regelung als Störgrößenregelung ausgeführt wird und der Regelung ein vorbestimmtes Kennfeld zugrunde gelegt wird, bei dem, abhängig von thermischen Außenbedingungen des Fahrzeugs, einer dem Innenraum zugeordneten Soll-Temperatur und einer Besetzung des Fahrzeugs mit Personen, ein von dem Klimagerät zu liefernder thermischer Leistungsbedarf bestimmt wird.

Somit werden zur Regelung des Klimagerätes vorzugsweise permanent Messwerte von Parametern, die die thermischen Außenbedingungen des Fahrzeuges (wenigstens die Außentemperatur) wiedergeben, sowie eine Besetzung des Fahrzeugs mit Personen mittels geeigneter Mess-/Zähleinrichtungen bestimmt. Gemeinsam mit der für den Innenraum des Fahrzeugs vorgesehenen Soll-Temperatur gestattet dann das Kennfeld, für die festgestellten Parameterwerte einen thermischen Leistungsbedarf zu bestimmen, der von dem Klimagerät bereitzustellen ist. Der jeweilige thermische Leistungsbedarf ist somit eine Funktion der thermischen Außenbedingungen des Fahrzeugs, der Soll-Temperatur und der Besetzung des Fahrzeugs.

Eine solche Regelung arbeitet wesentlich genauer und zeitnäher als bekannte Regelungen aus dem Stand der Technik.

Vorzugsweise umfassen die Außenbedingungen eine Außentemperatur der Umgebung des Fahrzeugs, eine relative Luftfeuchtigkeit der Umgebung des Fahrzeugs und eine Sonneneinstrahlung, der das Fahrzeug ausgesetzt ist. Diese drei thermischen Parameter gestatten eine umfassende Wiedergabe der Außenbedingungen des Fahrzeugs, die in eine Klimatisierung des Fahrzeuginnenraums eingehen. Bei einer vereinfachten Ausführung der Erfindung kann allein die Außentemperatur als stellvertretend für herrschende Außenbedingungen verwendet werden, wobei dann für die relative Luftfeuchtigkeit und die Sonneneinstrahlung Werte angenommen werden, die typisch für die gemessene Außentemperatur sind. Dann gehen in die Regelung nur zwei gemessene Störgrößen ein, nämlich die Außentemperatur und der Besetzungsgrad des Fahrgastinnenraums. Werden die relative Luftfeuchtigkeit und die Sonneneinstrahlung zusätzlich gemessen, wären es insgesamt vier Störgrößen.

Der thermische Leistungsbedarf, der von dem Klimagerät bereitzustellen ist, wird vorzugsweise von der Regelung in eine Temperatur und einen Frischluftvolumenstrom der von dem Klimagerät erzeugten Zuluft für den Innenraum umgesetzt.

Dabei wird es als vorteilhaft angesehen, wenn bei einer Änderung des thermischen Leistungsbedarfs im Betrieb des Fahrzeugs in einem ersten Schritt die Temperatur, der von dem Klimagerät erzeugten, Zuluft und in einem zweiten Schritt der Frischluftvolumenstrom geändert wird.

Das Kennlinienfeld ist bevorzugt aus einzelnen Kennlinien aufgebaut, die jeweils einem Besetzungsgrad des Innenraumes zugeordnet sind.

Ein Ausführungsbeispiel der Erfindung wird nachfolgend unter Bezugnahme auf die Diagramme noch näher erläutert. Es zeigen:
Figur 1 eine schematische Darstellung eines Kennfelds für ein Verfahren zur Regelung eines Klimageräts und
Figur 2 eine schematische Darstellung des Kennfelds von Figur 1, ergänzt um einen Parameterverlauf zur Umsetzung einer Regelungsstrategie

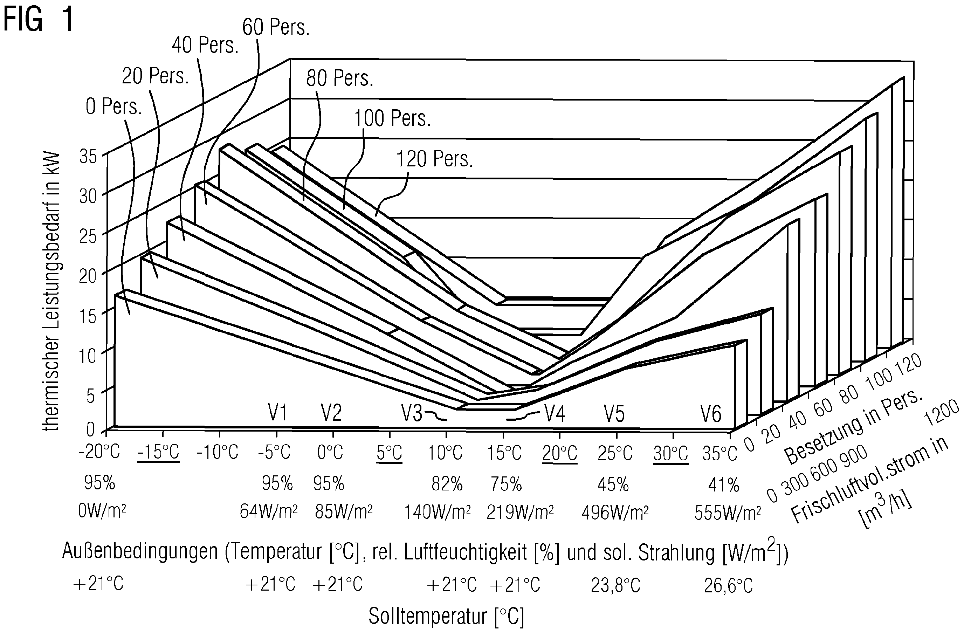

Figur 1 zeigt ein Diagramm eines Kennfelds, das bei einem Verfahren zur Regelung eines Klimageräts einsetzbar ist, mit dem mittels Kühl- und Heizeinrichtungen konditionierte Zuluft für den Innenraum eines Fahrzeugs erzeugt wird. Dazu verfügt das Klimagerät typischerweise über Kältekreisläufe und Heizregister, so dass innerhalb eines vorgegebenen Temperaturbereichs, in dem das Klimagerät arbeitet, Zuluft für den Innenraum des Fahrzeugs erzeugt wird. Zudem umfasst das Klimagerät einen Lüfter, dessen Drehzahl zur Einstellung eines Volumenstroms der Zuluft für den Fahrgastinnenraum kontinuierlich oder stufenweise einstellbar ist. Das Kennfeld ist einem vorgegebenem Fahrzeug zugeordnet, hier einem Einzelwagen eines Regionalzugs zur Personenbeförderung.

Das in Figur 1 dargestellte Kennfeld für ein Verfahren zur Regelung eines Klimageräts ist mit Hilfe eines Simulationsprogrammes berechnet worden. Alternativ wäre es auch möglich, für verschiedene Parameterkombinationen Messungen in einer Klimakammer vorzunehmen und deren Ergebnisse in das Kennfeld zu übertragen. An der horizontalen Achse in Figur 1 sind verschiedene Außentemperaturwerte [°c] angegeben. Für vorbestimmte repräsentative Energieverbrauchszyklen V1, ..., V6, sind neben der Störgröße "Außentemperatur [°c]" in jeweiliger Spaltenform zusätzlich Werte für die weiteren Störgrößen "relative Luftfeuchtigkeit [%]" in der Umgebung des Fahrzeugs und "Sonneneinstrahlung [W/m²]", der das Fahrzeug ausgesetzt ist, angegeben. Außerdem geht in die Regelung eine von der Außentemperatur abhängige Solltemperatur [°C] für einen Fahrgastinnenraum eines Fahrzeugs zur Beförderung von Personen ein.

Für jede in der Figur angegebene Parameterkombination aus den bis zu drei Störgrößen für die Wiedergabe der Außenbedingungen und der Solltemperatur finden sich in dem Kennfeld verschiedene Kennlinienwerte (im darstellten Ausführungsbeispiel sieben Kennwerte) für den thermischen Leistungsbedarf, die sich im Grad der Besetzung des Fahrzeugs durch Personen unterscheiden (im darstellten Ausführungsbeispiel sieben Besetzungswerte von 0 bis 120 Personen in 20er Schritten). Daher ist es von primärer Bedeutung für die Verwendung des Kennfeldes bei der Regelung des Klimageräts, beispielsweise von einer Fahrgastzähleinrichtung erhaltene Werte für die Besetzung des Fahrgastinnenraums zu erfassen. Der dafür ermittelte Wert bestimmt, welche Kennlinie der Kennlinienschar für die gegebene Besetzung des Fahrgastinnenraums zu benutzen ist.

Nachdem die betreffende Kennlinie festgelegt ist, entscheidet in diesem Ausführungsbeispiel allein die Außentemperatur darüber, wie groß der thermische Leistungsbedarf [kW] ist, der von dem Klimagerät zur Bereitstellung der konditionierten Zuluft zu liefern ist. Bei dem thermischen Leistungsbedarf kann es sich je nach herrschenden thermischen Außenbedingungen um Kälte- oder Heizleistung handeln.

Beispielshalber ergibt sich für eine Außentemperatur von 0°C, eine relative Luftfeuchtigkeit von 95%, eine Sonneneinstrahlung von 85W/m2 (Energieverbrauchszyklus V2) und eine Soll-temperatur im Fahrgastinnenraum von +21°C, ein thermischer Leistungsbedarf von etwa 7,5 kW (Heizleistung), wenn der Fahrzeuginnenraum nicht mit Personen besetzt ist, was der vordersten Kennlinie in Figur 1 entspricht. Bei einer Besetzung mit 20 bzw. 40 Personen beträgt der thermische Leistungsbedarf ca. 13 kW bzw. ca. 17 kW, usw.

Sobald die gemessene Außentemperatur die ihr zugeordnete Solltemperatur für den Fahrgastinnenraum unterschreitet, ergibt sich für den thermischen Leistungsbedarf eine Kühlleistung.

Es ist ersichtlich, dass mit zunehmender Besetzung des Fahrgastinnenraums durch Personen der thermische Leistungsbedarf von Kennlinie zu Kennlinie variiert.

Der mit Hilfe des Kennlinienfeldes ermittelte thermische Leistungsbedarf wird dann umgesetzt in den Betrieb des Klimagerätes, was die von ihm bereitgestellte Temperatur für die Zuluft für den Fahrgastinnenraum (FGR) angeht, jedoch auch bezüglich des Frischluftvolumenstroms [m3/h]. In der Regel handelt es sich bei der Zuluft um eine Mischluft aus einem Umluft- und einem Frischluftanteil, die gemeinsam mittels des Klimagerätes konditioniert werden. Mit zunehmender Besetzung das Fahrgastinnenraumes, gemessen z. B. mit Hilfe eines CO2-Sensors, steigt der Frischluftvolumenstrom an. Dies bedeutet für den Fall, dass der Zuluftvolumenstrom für den Fahrgastinnenraum konstant gehalten wird, dass der Frischluftanteil der Zuluft zulasten z. B. eines Umluftanteils der Zuluft ansteigt.

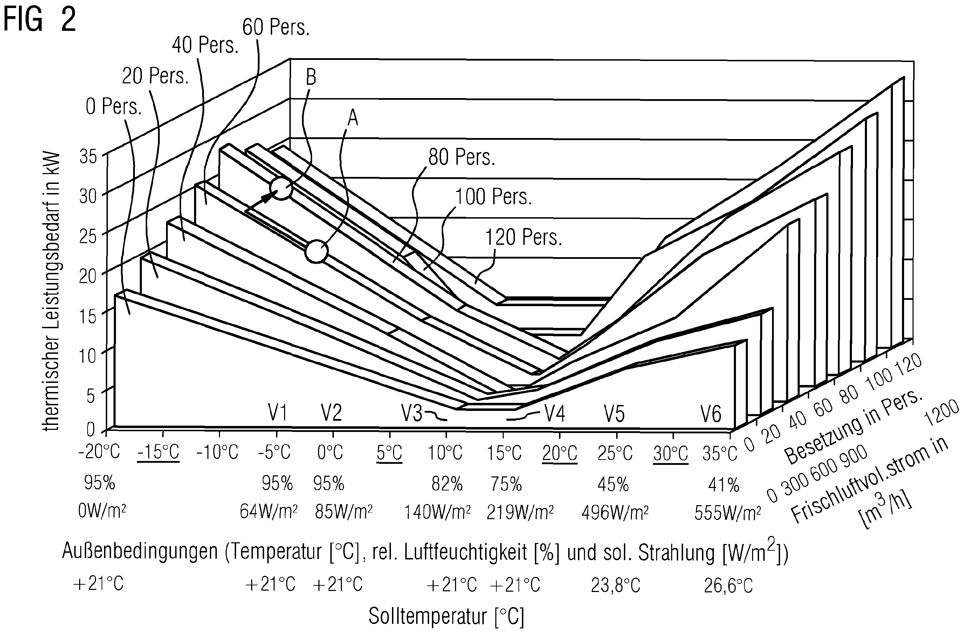

Figur 2 zeigt nunmehr die Situation, dass sich der Fahrgastinnenraum des Schienenfahrzeugs in einem Betriebszustand befindet, der durch die Wertekombination von 0 °C Außentemperatur, 95% relativer Luftfeuchtigkeit, 85 W/m2 Sonneneinstrahlung und eine Solltemperatur von + 21°C (Energieverbrauchszyklus V2) sowie eine Besetzung des Fahrgastinnenraums mit 60 Personen gekennzeichnet ist (Punkt A). Demgegenüber ist eine Endsituation für den Betriebszustand des Fahrgastinnenraumes des Fahrzeugs dadurch charakterisiert, dass die Außentemperatur -5°C, die relative Luftfeuchtigkeit 95%, die Sonneneinstrahlung 64 W/m2, die Solltemperatur wiederum +21°C beträgt (Energieverbrauchszyklus V1), die Besetzung mit Personen jedoch auf 80 angestiegen ist (Punkt B). Der Übergang vom Anfangszustand A zum Endzustand B ist in Figur 2 durch einen abgewinkelten Pfeil angegeben.

Dies veranschaulicht, dass im Rahmen einer bevorzugten Regelstrategie zuerst die Temperatur der von dem Klimagerät gelieferten Zuluft für den Fahrgastinnenraum erhöht und erst nachfolgend der Frischluftvolumenstrom den Erfordernissen angepasst wird.

## Patentansprüche

1. Verfahren zur Regelung eines Klimageräts, mit dem mittels Kühl- und Heizeinrichtungen konditionierte Zuluft für den Innenraum eines Fahrzeugs erzeugt wird, wobei die Regelung als Störgrößenregelung ausgeführt wird, **dadurch gekennzeichnet, dass**
der Regelung ein vorbestimmtes Kennfeld zugrunde gelegt wird, bei dem, abhängig von thermischen Außenbedingungen des Fahrzeugs, einer dem Innenraum zugeordneten Soll-Temperatur und einer Besetzung des Fahrzeugs mit Personen, ein von dem Klimagerät zu liefernder thermischer Leistungsbedarf bestimmt wird.

2. Verfahren nach Anspruch 1,
**dadurch gekennzeichnet, dass**
die Außenbedingungen eine Außentemperatur der Umgebung des Fahrzeugs, eine relative Luftfeuchtigkeit der Umgebung des Fahrzeugs und eine Sonneneinstrahlung, der das Fahrzeug ausgesetzt ist, umfassen.

3. Verfahren nach einem der Ansprüche 1 oder 2,
**dadurch gekennzeichnet, dass**
der thermische Leistungsbedarf von der Regelung in eine Temperatur, der von dem Klimagerät erzeugten, Zuluft für den Innenraum und einen Frischluftvolumenstrom umgesetzt wird.

4. Verfahren nach einem der Ansprüche 1 bis 3,
**dadurch gekennzeichnet, dass**
bei einer Änderung des thermischen Leistungsbedarfs im Betrieb des Fahrzeugs in einem ersten Schritt die Temperatur, der von dem Klimagerät erzeugten, Zuluft und in einem zweiten Schritt der Frischluftvolumenstrom geändert wird.

5. Verfahren nach einem der Ansprüche 1 bis 4,
**dadurch gekennzeichnet, dass**
das Kennlinienfeld aus einzelnen Kennlinien aufgebaut ist, die jeweils einem Besetzungsgrad des Innenraumes und einem Frischluftvolumenstrom zugeordnet sind.

## Claims

1. Method for controlling an air-conditioning device used to generate supply air conditioned by cooling and heating devices for the interior of a vehicle, the control being designed as interference variable control,
**characterized in that**
the control is based on a predetermined characteristic map, in which a thermal output requirement to be supplied by the air-conditioning device is determined on the basis of external thermal conditions of the vehicle, a target temperature assigned to the interior and the occupancy of the vehicle by persons.

2. Method according to Claim 1,
**characterized in that**
the external conditions comprise an outside temperature of the surroundings of the vehicle, a relative atmospheric humidity of the surroundings of the vehicle and solar radiation to which the vehicle is exposed.

3. Method according to either of Claims 1 and 2,
**characterized in that**
the thermal output requirement is converted by the control into a temperature of the supply air generated by the air-conditioning device for the interior and a fresh-air volumetric flow.

4. Method according to one of Claims 1 to 3,
**characterized in that**
when there is a change in the thermal output requirement during the operation of the vehicle, in a first step the temperature of the supply air generated by the air-conditioning device is changed and in a second step the fresh-air volumetric flow is changed.

5. Method according to one of Claims 1 to 4,
**characterized in that**
the characteristic map is made up of individual characteristic curves which are respectively assigned to a degree of occupancy of the interior and to a fresh-air volumetric flow.

## Revendications

1. Procédé de réglage d'un appareil de conditionnement d'air, par lequel on produit de l'air entrant, conditionné au moyen de dispositifs de refroidissement et de chauffage, pour l'espace intérieur d'un véhicule, dans lequel on effectue le réglage en réglage de grandeurs de perturbation, **caractérisé en ce qu'**
on met à la base du réglage un diagramme de caractéristiques déterminé à l'avance, dans lequel, en fonction des conditions thermiques extérieures au véhicule, d'une température de consigne, associée à l'espace intérieur, et d'une occupation du véhicule par des personnes, on détermine un besoin de puissance thermique à fournir par l'installation de conditionnement d'air.

2. Procédé suivant la revendication 1,
**caractérisé en ce que**
les conditions extérieures comprennent une température extérieure de l'environnement du véhicule, une humidité relative de l'air de l'environnement du véhicule et un rayonnement solaire, auquel le véhicule est exposé.

3. Procédé suivant la revendication 1 ou 2,
**caractérisé en ce que**
l'on transforme le besoin de puissance thermique par le réglage en une température de l'air entrant, produit par l'appareil de conditionnement de l'air, pour l'espace intérieur et en un courant en volume d'air frais.

4. Procédé suivant l'une des revendications 1 à 3,
**caractérisé en ce que**
s'il se produit une modification du besoin de puissance thermique au cours du fonctionnement du véhicule, on modifie, dans un premier stade, la température de l'air entrant, produit par l'appareil de conditionnement de l'air, et, dans un deuxième stade, le courant en volume de l'air frais.

5. Procédé suivant l'une des revendications 1 à 4,
**caractérisé en ce que**
le diagramme de courbes caractéristiques est composé de diverses courbes caractéristiques, qui sont associées chacune à un degré d'occupation de l'espace intérieur et à un courant en volume de l'air frais.
